# DEMANDE DE BREVET EUROPEEN

(11) **EP 0 851 258 A1**
(43) Date de publication de la demande: **01.07.1998**
(21) Numéro de dépôt: 97403075.1
(22) Date de dépôt: 18.12.1997
(51) Int. Cl.: G02B 6/44

(54) **Câble à fibres optiques, flexible et de résistance élevée**

(30) Priorité: 23.12.1996 FR 9615840
(71) Demandeur: ALCATEL ALSTHOM COMPAGNIE GENERALE D'ELECTRICITE, 75008 Paris (FR)
(72) Inventeur: Benzel, David, 62100 Calais (FR); Bourghelle, Patrick, 93200 Saint-Denis (FR)
(74) Mandataire: Buffière, Michelle

(57) **Abrégé**

Le câble à fibres optiques comporte des fibres optiques enroulées hélicoïdalement autour d'un élément central. Il est caractérisé en ce que lesdites fibres optiques (2) sont noyées dans une couche d'enrobage (3) définissant avec ledit élément central (1) une stucture unitaire compacte s'opposant à une pénétration et une propagation d'eau. Application : câble de transmission optique.

## Description

La présente invention porte sur un câble à fibres optiques, flexible et de résistance élevée, qui est de petit diamètre, de faible poids et de faible coût.

Le document JP-A-21 62 307 divulgue un câble à fibres optiques dont les fibres sont enroulées et maintenues autour d'un élément central et sont entourées d'une gaine extérieure de protection dudit câble. L'élément central est réalisé en un matériau plastique renforcé de fibres, dit matériau FRP, et est muni d'une couche périphérique extrudée de résine absorbant l'eau. Les fibres optiques enroulées autour de ce porteur central sont retenues en place par une bande constituée en résine absorbant l'eau, qui est enroulée autour d'elles. La gaine extérieure est extrudée sur cette bande. La propagation longitudinale d'eau qui s'est infiltrée à l'intérieur du câble est ainsi bloquée par la bande sur la périphérie des fibres optiques en place et par la couche sur la périphérie du porteur, prévues l'une et l'autre à cet effet en résine absorbant l'eau.

Ce câble à fibres optiques, qui est flexible et relativement résistant, est de faible diamètre et de faible poids. Sa réalisation est cependant relativement longue et conduit à un coût relativement élevé du câble.

La présente invention a pour but de réaliser un câble à fibres optiques du type précité, mais dont la résistance est améliorée et le coût abaissé.

Elle a pour objet un câble à fibres optiques, comportant un élément central flexible, une couche interne en matériau s'opposant à la propagation d'eau entourant ledit élément central, des fibres optiques enroulées hélicoïdalement autour de l'élément central et de ladite couche interne et un moyen périphérique de maintien desdites fibres optiques, et de blocage de propagation d'eau, caractérisé en ce que lesdites fibres optiques sont noyées dans une couche d'enrobage, constituant à la fois ladite couche interne autour dudit élément central et ledit moyen périphérique de maintien desdites fibres optiques et définissant avec ledit élément central une structure unitaire compacte d'ensemble.

Avantageusement, en outre :
- lesdites fibres optiques sont non jointives les unes avec les autres autour dudit élément central ;
- ledit élément central est un filin formé de fibres de résistance assemblées entre elles ou comporte au moins une fibre optique supplémentaire dite centrale.

Les caractéristiques et avantages de la présente invention ressortiront de la description faite ci-après en se référant aux dessins ci-annexés. Dans ces dessins :
- la figure 1 représente un câble à fibres optiques selon l'invention,
- la figure 2 montre une variante de réalisation du câble de la figure 1.

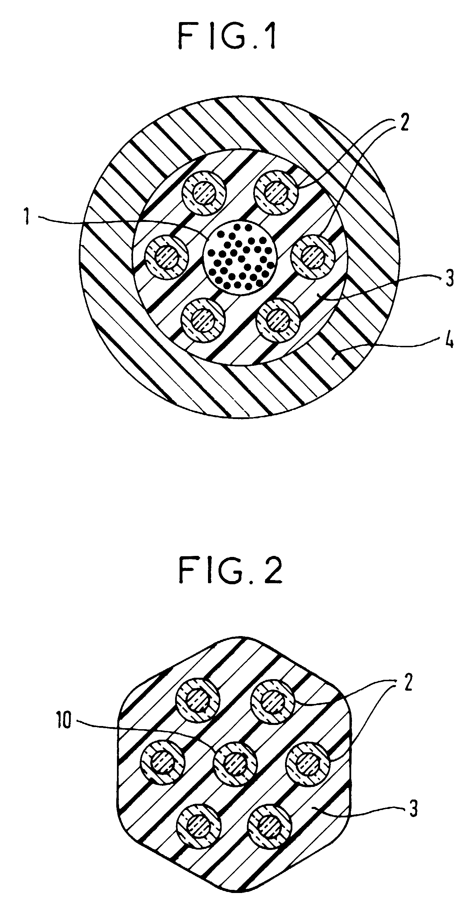

Le câble représenté dans la figure 1 comporte un élément central 1, constitué par un filin porteur flexible, très résistant et de module d'élasticité élevé, et des fibres optiques 2 enroulées autour de cet élément central. Les fibres optiques 2 sont totalement noyées dans une couche d'enrobage 3, constituant avec l'élément central une structure unitaire compacte d'ensemble. Une gaine 4 recouvre le câble pour sa protection extérieure.

Le filin central permet l'obtention de la résistance élevée et la grande flexibilité du câble, qui par ailleurs est de petit diamètre, de faible poids et de coût réduit notamment du simple câblage des fibres optiques dans la couche d'enrobage autour de ce filin. Il est avantageusement constitué par des fibres ou des mèches de résistance, en particulier d'aramide, qui sont assemblées les unes aux autres.

Les fibres optiques 2 sont enroulées en hélice en S ou SZ autour du filin central et noyées dans la couche d'enrobage. Ces fibres optiques 2 sont préalablement identifiées individuellement, par exemple par un codage couleur ou un marquage convenable de chacune d'elles, avant leur mise en place autour de l'élément central et leur enrobage dans la couche 3.

La couche d'enrobage est avantageusement extrudée sur l'élément central avec la mise en place autour de celui-ci des fibres optiques. Ceci est réalisé à l'aide d'une filière d'extrusion munie de trous de guidage des fibres autour de l'élément central et montée tournante dans un seul sens ou alternativement dans un sens ou l'autre.

La couche d'enrobage 3 adhère à l'élément central 1 qu'elle enrobe avec les fibres optiques 2 pour définir la structure unitaire compacte résultante. Cette structure unitaire compacte s'oppose ainsi à une pénétration et une propagation d'eau. Le matériau de la couche d'enrobage est lui-même choisi à cet effet. Il est constitué par une résine absorbante et/ou gonflant en présence d'eau. Cette structure unitaire compacte est également prévue pour éviter l'application de contraintes sur les fibres optiques 2. Le matériau de la couche d'enrobage est en conséquence prévu de densité relativement basse, évitant de soumettre les fibres optiques à des forces de compression.

La gaine extérieure 4 est réalisée en matériau thermoplastique et est extrudée sur la couche d'enrobage 3. Elle est d'épaisseur réduite, due à la présence de cette couche d'enrobage sous-jacente.

La figure 2 montre une variante de réalisation du câble selon l'invention, qui comparé à celui de la figure 1 comporte une fibre optique supplémentaire centrale 10, remplaçant l'élément central précité 1 et recevant autour d'elle les fibres optiques 2 enroulées hélicoïdalement en S ou SZ et noyées dans la couche d'enrobage 3. Cette couche d'enrobage 3 sert également de protection extérieure du câble, alors réalisé sans la gaine de protection extérieure 4 précitée. Elle est avantageusement constituée en résine réticulable aux ultra-violets, de module d'élasticité relativement faible. Ce câble ainsi réalisé est flexible et de diamètre et de poids pouvant être réduits au maximum. Il reste de résistance élevée grâce à sa structure unitaire compacte. Il présente dans cette figure 2 une section droite polygonale régulière, de forme hexagonale pour les six fibres optiques 2 illustrées, ce qui permet de minimiser la quantité de matière de la couche d'enrobage de l'ensemble des fibres optiques et permet de ce fait de minimiser le poids du câble.

Dans une autre variante de réalisation, cette fibre optique centrale 10 ou plusieurs fibres optiques dites centrales peuvent être montées libres sous un tube de protection en matière plastique, pour constituer l'élément central du câble. Bien entendu le câble selon la figure 2 ou les variantes suggérées peuvent être de section circulaire et/ou peuvent comporter une gaine de protection extérieure entourant la couche d'enrobage. Le câble selon la figure 1 peut quant à lui être sans gaine de protection extérieure.

## Revendications

1. Câble à fibres optiques, comportant un élément central flexible, une couche interne en matériau s'opposant à la propagation d'eau entourant ledit élément central, des fibres optiques enroulées hélicoïdalement autour de l'élément central et de ladite couche interne, et un moyen périphérique de maintien desdites fibres optiques et de blocage de propagation d'eau, caractérisé en ce que lesdites fibres optiques (2) sont noyées dans une couche d'enrobage (3), constituant à la fois ladite couche interne autour dudit élément central (1,10) et ledit moyen périphérique de maintien desdites fibres optiques et définissant avec ledit élément central une structure unitaire compacte d'ensemble.

2. Câble selon la revendication 1, caractérisé en ce que lesdites fibres optiques (2) sont non jointives les unes avec les autres.

3. Câble selon l'une des revendications 1 et 2 caractérisé en ce que ledit élément central (1) est un filin flexible et résistant, de module d'élasticité élevé.

4. Câble selon la revendication 3, caractérisé en ce que ledit filin est constitué en fibres et/ou mèches d'aramide.

5. Câble selon l'une des revendications 1 et 2, caractérisé en ce que ledit élément central (10) comporte au moins une fibre optique supplémentaire (10), dite fibre optique centrale.
